# EUROPÄISCHE PATENTSCHRIFT

(11) **EP 4 276 301 B1**
(45) Veröffentlichungstag und Bekanntmachung des Hinweises auf die Patenterteilung: **03.09.2025**
(21) Anmeldenummer: 22173336.3
(22) Anmeldetag: 13.05.2022
(51) Int. Cl.: F03D 1/06, F03D 13/10

(54) **VERFAHREN ZUR MONTAGE UND VERWENDUNG EINES MONTAGEADAPTERS ZUR MONTAGE VON ROTOBLÄTTERN**
METHOD FOR MOUNTING AND APPLICATION OF A MOUNTING ADAPTER FOR MOUNTING OF ROTOR BLADES
PROCÉDÉ DE MONTAGE ET UTILISATION D'UN ADAPTEUR DE MONTAGE POUR MONTAGE DES PALES DE ROTOR

(43) Veröffentlichungstag der Anmeldung: 15.11.2023
(73) Patentinhaber: Wobben Properties GmbH, 26607 Aurich (DE)
(72) Erfinder: Ressel, Dirk, 26605 Aurich (DE); Siebelts, Stephan, 26427 Holtgast (DE); Schumann, Klaas, 26524 Hage (DE); Beeckmann, Sascha, 26802 Moormerland (DE)
(74) Vertreter: Eisenführ Speiser

(56) Entgegenhaltungen:
- EP-A1- 2 623 768
- EP-A1- 3 001 029
- EP-A1- 3 001 030
- EP-A1- 3 502 465
- EP-A1- 3 805 553
- US-A1- 2013 216 394

## Beschreibung

Die vorliegende Erfindung betrifft ein Verfahren zur Montage von Rotorblättern an einer Windenergieanlage und die Verwendung eines Montageadapters zur Montage von Rotorblättern an einer Windenergieanlage.

Zur Montage einer Windenergieanlage wird ein Kran mit einer entsprechenden Hakenhöhe benötigt, um die Gondel, den Generator sowie die Rotorblätter montieren zu können. Mit größer werdender Nabenhöhe muss auch die Hakenhöhe (d. h. die maximale Höhe des Hakens) vergrößert werden. Dies ist jedoch nicht beliebig möglich, da Kräne mit einer entsprechenden Hakenhöhe nicht beliebig verfügbar sind.

WO 2020/187959 A1 beschreibt ein Verfahren zur Montage von Rotorblättern einer Windenergieanlage. Hierbei wird versucht, durch intelligentes Drehen der Rotornabe eine Montage der Rotorblätter zu vereinfachen und insbesondere die hierfür benötigte Kranhöhe zu reduzieren.

EP 2623768 A1 zeigt einen Montageadapter zur Montage eines Rotorblattes. Der Montageadapter weist einen ersten Adapterabschnitt zum Anschließen eines Rotorblattes und einen zweiten Adapterabschnitt zum Anschließen an einen Rotorblattanschluss auf.

EP 3 001 030 A1 zeigt einen Montageadapter zur Montage von Rotorblättern mit einem ersten Abschnitt zum Anschließen an einen Blattadapter und einen zweiten Abschnitt zum Anschließen an ein Rotorblatt.

Es ist eine Aufgabe der vorliegenden Erfindung, ein Verfahren zur Montage von Rotorblättern an einer Windenergieanlage vorzusehen, welches einen vereinfachten Aufbau bei größeren Nabenhöhen ermöglicht. Es ist ferner eine Aufgabe der vorliegenden Erfindung, eine reduzierte Hakenhöhe eines Krans bei der Montage von Rotorblättern einer Windenergieanlage zu ermöglichen.

Diese Aufgabe wird durch das Verfahren zur Montage von Rotorblättern einer Windenergieanlage nach Anspruch 1 und die Verwendung eines Montageadapters nach Anspruch 7 gelöst.

Gemäß einem Aspekt der vorliegenden Erfindung wird ein Montageadapter zur Montage eines Rotorblatts verwendet, welcher als ein Gelenkadapter ausgestaltet sein kann. Der Adapter wird während der Montage an einem der drei Rotorblattanschlüsse an der Nabe vorgesehen. Der Adapter weist einen ersten und zweiten Adapterabschnitt jeweils mit einer Flanschfläche auf. Der erste Adapterabschnitt kann mittels der ersten Flanschfläche an einem Rotorblattanschluss montiert sein. Der zweite Adapterabschnitt kann mittels der zweiten Flanschfläche an dem Rotorblatt montiert werden. Der erste und zweite Adapterabschnitt sind über eine Schwenkachse miteinander schwenkbar verbunden. Somit kann der Winkel zwischen der ersten und zweiten Flanschfläche variiert oder eingestellt werden. Gemäß einem Aspekt der vorliegenden Erfindung weist der Montageadapter z.B. zwei Betriebspositionen mit zwei unterschiedlichen Winkeln zwischen der ersten und zweiten Flanschfläche auf. Dies kann beispielsweis durch eine Verwendung von Rundschlingen mit unterschiedlicher Länge zwischen dem ersten und zweiten Adapterabschnitt erreicht werden. Durch die Länge der Rundschlingen kann der maximale Abstand zwischen dem ersten und zweiten Adapterabschnitt und damit der maximale Winkel dazwischen begrenzt werden. Die Rundschlingen verhindern, dass die ersten und zweiten Adapterabschnitte weiter aufklappen.

Gemäß einem Aspekt der Anmeldung weist der erste und zweite Adapterabschnitt jeweils zwei parallele Streben auf, die mit der Flanschfläche verbunden sind. Somit kann ein gewichtsoptimierter Montageadapter erhalten werden, der trotzdem über eine ausreichende mechanische Stabilität verfügt.

Gemäß einem Aspekt der Anmeldung kann die erste und/oder zweite Flanschfläche als durchgehende Platte oder als durchgehendes Blech oder alternativ als mindestens zwei Blechabschnitte ausgestaltet sein, welche im Bereich der ersten und zweiten Enden des ersten und zweiten Adapterabschnitts vorgesehen sein können. Die Flanschflächen dienen dazu, den Montageadapter während der Montage der Rotorblätter an einem Rotorblattanschluss der Nabe und an der Rotorblattwurzel zu befestigen.

Zwischen dem ersten und zweiten Adapterabschnitt kann eine Hydraulikeinheit mit einer einstellbaren Länge vorgesehen sein. Damit kann ein Winkel zwischen dem ersten und zweiten Adapterabschnitt eingestellt werden. Mittels der Hydraulikeinheit können der erste und zweite Adapterabschnitt zueinander verfahren werden. Die Enden der Hydraulikeinheit können jeweils an dem ersten und zweiten Adapterabschnitt befestigt werden, um den Winkel zwischen dem ersten und zweiten Adapterabschnitt einstellen zu können. Optional kann die Hydraulikeinheit so ausgelegt sein, dass sie dazu geeignet ist, den ersten oder zweiten Adapterabschnitt zu betätigen, ohne dass ein Rotorblatt daran befestigt ist.

Die Hydraulikeinheit kann optional durch eine Teleskopeinheit mit einem elektrischen Motor zur Verstellung der Länge der Teleskopeinheit ersetzt werden.

Gemäß einem Aspekt der vorliegenden Erfindung wird ein Verfahren zur Montage von Rotorblättern an einer Windenergieanlage vorgesehen. Die Windenergieanlage weist eine Nabe mit drei Rotorblattanschlüssen jeweils zur Aufnahme von Rotorblättern auf. Die Windenergieanlage weist eine Turmlängsachse auf. Ein Montageadapter, insbesondere ein oben beschriebener Montageadapter, wird an einem der Rotorblattanschlüsse montiert. Die Nabe wird gedreht, so dass einer der drei Rotorblattanschlüsse sich in einer 3-Uhr-Position oder in einem Winkel von 90° bezogen auf die Turmlängsachse befindet. Ein erstes Rotorblatt wird angehoben und an diesem Rotorblattanschluss montiert. Der Montageadapter befindet sich an einer ersten Betriebsposition mit einem ersten Winkel zwischen der ersten und zweiten Flanschfläche. Ein zweites Rotorblatt wird an einem weiteren der drei Rotorblattanschlüsse montiert. Ein drittes Rotorblatt wird an der zweiten Flanschfläche des Montageadapters montiert. Der Winkel zwischen der ersten und zweiten Flanschfläche des Montageadapters wird geändert, so dass sich der Montageadapter in einer zweiten Betriebsposition befindet. Das dritte Rotorblatt wird demontiert. Der Montageadapter wird demontiert und das dritte Rotorblatt wird wieder montiert.

Gemäß einem Aspekt der vorliegenden Erfindung erfolgt ein Drehen der Nabe, so dass sich die zweite Flanschfläche parallel zur Drehachse befindet, bevor das dritte Rotorblatt montiert wird. Das dritte Rotorblatt wird an der zweiten Flanschfläche montiert. Die Nabe wird im Uhrzeigersinn gedreht. Die Betriebsposition des Montageadapters wird geändert. Die Nabe wird im Uhrzeigersinn um 30° gedreht. Das dritte Rotorblatt wird demontiert. Der Montageadapter wird demontiert und das dritte Rotorblatt wird wieder montiert.

Gemäß einem weiteren Aspekt der vorliegenden Erfindung erfolgt ein Montieren des zweiten Rotorblattes an einer zweiten Flanschfläche des Montageadapters, welche parallel zur Turmlängsachse vorgesehen ist. Die Betriebsposition des Montageadapters wird geändert und die Nabe wird beispielsweise im Uhrzeigersinn gedreht. Die Betriebsposition des Montageadapters wird geändert, so dass die erste und zweite Flanschfläche im Wesentlichen parallel zueinander angeordnet sind und das dritte Rotorblatt sich an der zweiten Flanschfläche befindet und im Wesentlichen horizontal ausgerichtet ist. Das Rotorblatt wird demontiert, der Montageadapter wird demontiert und das dritte Rotorblatt wird wieder montiert.

Gemäß einem weiteren Aspekt der vorliegenden Erfindung wird ein Verfahren zur Montage von Rotorblättern an einer Windenergieanlage vorgesehen. Die Windenergieanlage weist eine Nabe mit drei Rotorblattanschlüssen jeweils zur Aufnahme von Rotorblättern auf. Die Windenergieanlage weist ferner eine Turmlängsachse auf. Ein erstes Rotorblatt wird an einem ersten Rotorblattanschluss montiert, welcher sich insbesondere an einer 3-Uhr-Position befindet. Die Nabe wird um 30° gedreht. Ein zweites Rotorblatt wird an dem dritten Rotorblattanschluss montiert, welcher sich insbesondere an einer 8-Uhr-Position befindet. Ein oben beschriebener Montageadapter wird an einem dritten Rotorblattanschluss befestigt. Der Adapterabschnitt wird um einen gewünschten Winkel aufgeklappt und das dritte Rotorblatt wird montiert, wobei sich der aufgeklappte Adapterabschnitt in einer 3-Uhr-Position befindet. Der Rotor wird um 30° gedreht. Das dritte Rotorblatt wird hochgezogen und der Winkel zwischen dem ersten und zweiten Adapterabschnitt wird verkürzt. Der Rotor wird um 30° gedreht. Das dritte Rotorblatt wird demontiert, der Montageadapter wird demontiert und das dritte Rotorblatt wird wieder montiert.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine Windenergieanlage gemäß einem Aspekt der Erfindung,
- Fig. 2A: zeigen jeweils eine Ansicht eines Montageadapters zur Montage von
- bis 2C: Rotorblättern einer Windenergieanlage gemäß einem ersten Ausführungsbeispiel,
- Fig. 3A: zeigen verschiedene Schritte zur Montage von Rotorblättern einer
- bis 3P: Windenergieanlage gemäß dem zweiten Ausführungsbeispiel, und
- Fig. 4A: zeigen jeweils eine Ansicht eines Montageadapters gemäß einem
- bis 4X: dritten Ausführungsbeispiel.

Gemäß der Erfindung kann eine Turmlängsachse 102a 0° oder eine 12 Uhr-Position darstellen. Die Positionen von Rotorblattanschlüsse der Windenergieanlagen 100 lassen sich so einem Winkel (0° bis 360°) oder einer "Uhrzeit" (12 Uhr bis 11 Uhr) zuordnen.

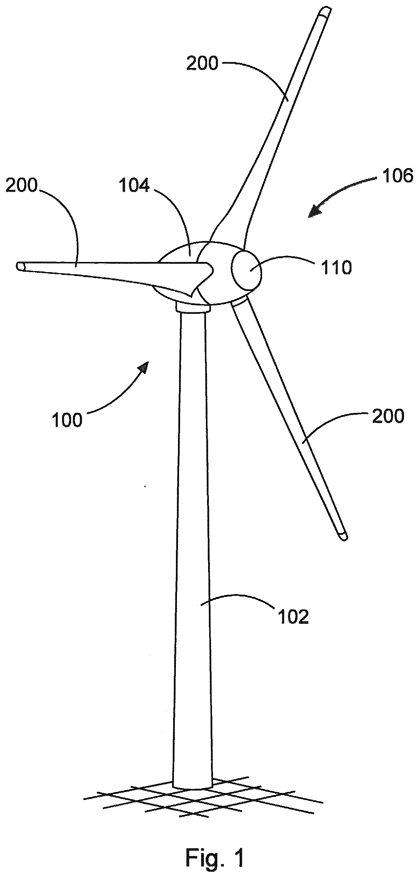

Fig. 1 zeigt eine schematische Darstellung einer Windenergieanlage 100**.**

Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage 100 durch den Wind in eine Drehbewegung versetzt und dreht somit auch einen Rotor 106 oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden. Die Rotorblätter 200 können einteilig oder mehrteilig ausgestaltet sein.

Gemäß der Erfindung können Positionen des aerodynamischen Rotors 106 sowie der Rotorblattanschlüsse 121, 122, 123 anhand eines Uhr-Zifferblattes oder anhand von Winkelangaben beschrieben werden. 0° entspricht dabei einer 12-Uhr-Position und kann beispielsweise durch eine Turmlängsachse 102a bestimmt werden. 90° entspricht einer 3-Uhr-Position, 180° entspricht einer 6-Uhr-Position und 270° entspricht einer 9-Uhr-Position.

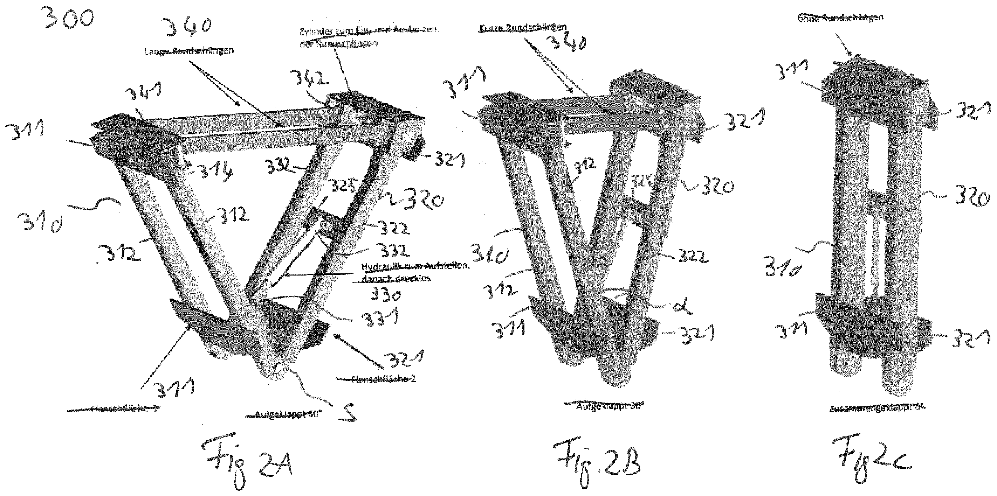

Fig. 2A bis 2C zeigen jeweils eine Ansicht eines Montageadapters zur Montage von Rotorblättern 200 einer Windenergieanlage 100 gemäß einem ersten Ausführungsbeispiel. Ein Adapter bzw. ein Montageadapter 300 gemäß dem ersten Ausführungsbeispiel weist einen ersten und zweiten Adapterabschnitt 310, 320 auf, welche zueinander verschwenkbar ausgestaltet sind, d. h. der Winkel α zwischen dem ersten und zweiten Adapterabschnitt 310, 320 kann verändert werden.

Der erste Adapterabschnitt 310 weist eine erste Flanschfläche 311 sowie optional zwei erste Streben 312 auf. Die zwei ersten Streben 312 weisen jeweils ein erstes und zweites Ende 313, 314 auf. Der zweite Adapterabschnitt 320 weist eine zweite Flanschfläche 321 sowie optional zwei zweite Streben 322 auf, welche mit der zweiten Flanschfläche 321 verbunden sind. Die zwei zweiten Streben 322 weisen jeweils ein erstes und zweites Ende 323, 324 auf.

Die erste und zweite Flanschfläche 311, 312 können jeweils als durchgängige Platte oder als zwei Blechabschnitte ausgestaltet sein, die mit den zwei ersten oder zwei zweiten Streben verbunden sind.

Die ersten Enden 313, 323 der ersten und zweiten Streben 312, 322 sind um eine Schwenkachse S schwenkbar miteinander verbunden.

Zwischen den zweiten Enden 314, 324 der ersten und zweiten Adapterabschnitte 310, 320 können zwei Rundschlingen 340 jeweils mit einem ersten und zweiten Ende 341, 342 vorgesehen sein.

Die Längen der Rundschlingen 340 bestimmen den maximalen Winkel zwischen dem ersten und zweiten Adapterabschnitt 310,320.

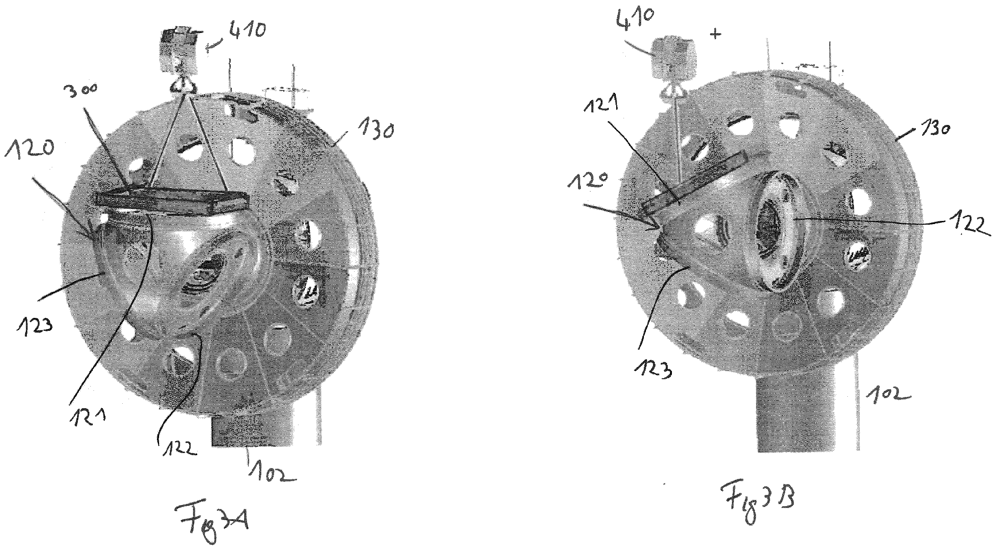

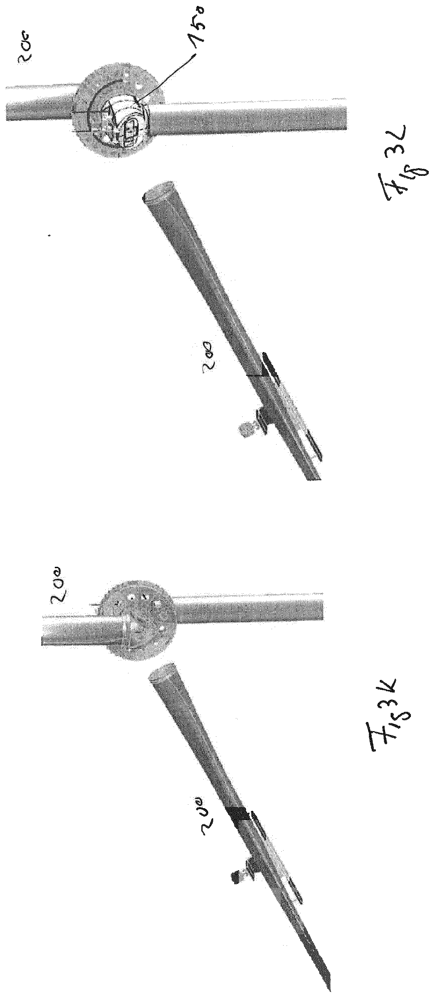

Fig. 3A bis 3P zeigen verschiedene Schritte zur Montage von Rotorblättern 200 einer Windenergieanlage 100 gemäß dem ersten Ausführungsbeispiel. Im ersten Schritt (s. Fig. 3A) wird eine Nabe 120 der Windenergieanlage 100 mit drei Rotorblattanschlüssen 121, 122, 123 mittels eines Kranhakens 410 und einer Schlinge oder eines Seils 420 montiert. Hierbei kann ein Montageadapter 300 gemäß der Erfindung bereits an einem Rotorblattanschluss 121, 122, 123 montiert sein. Alternativ dazu kann der Montageadapter 300 separat mittels des Kranhakens 410 nach oben gezogen werden und an einem Rotorblattanschluss 121, 122, 123 (insbesondere an dem ersten Rotorblattanschluss 121) montiert werden. Anschließend (s. Fig. 3B) kann die Nabe 120 gegen den Uhrzeigersinn gedreht werden, so dass der zweite Rotorblattanschluss 122 sich in einer 3 Uhr-Position bezogen auf eine Turmlängsachse 102a befindet.

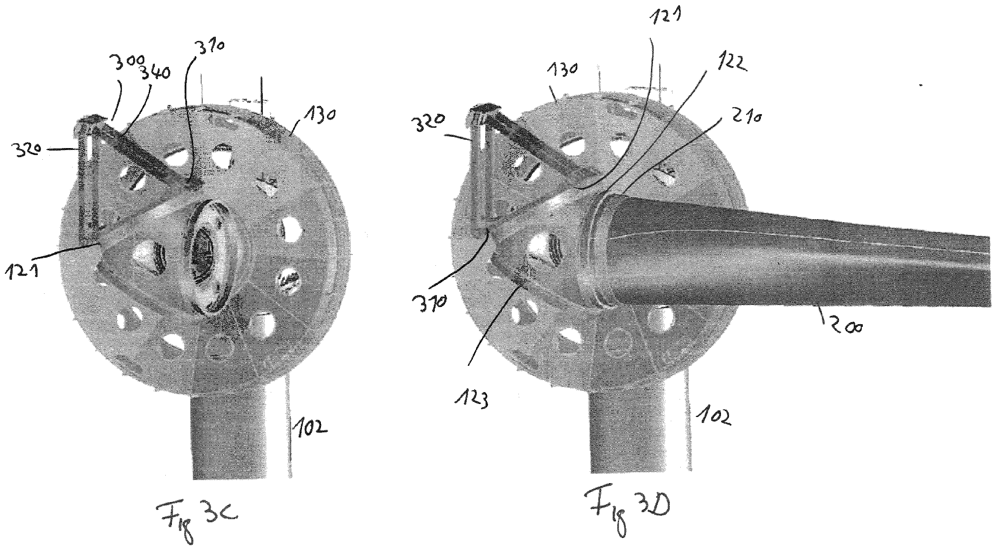

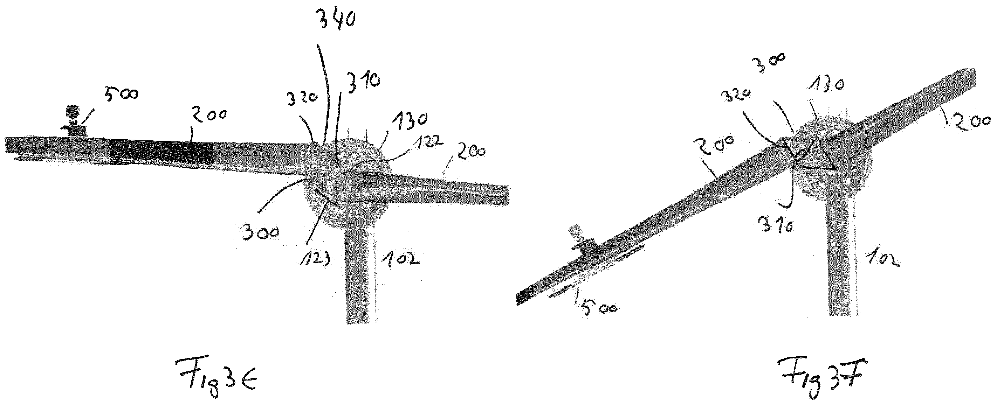

Anschließend wird (s. Fig. 3C) der Montageadapter 300 aufgeklappt. Insbesondere wird ein Adapterabschnitt aufgeklappt. Dieser Adapterabschnitt wird von den Rundschlingen 340 gehalten, so dass er nicht weiter aufklappen kann. Das erste Blatt 200 wird beispielsweise mittels einer Blatttraverse 500 an dem zweiten Rotorblattanschluss 122 (welches sich in der 3 Uhr-Position befindet) montiert (s. Fig. 3D). Hierbei wird das Rotorblatt 200 im Wesentlichen horizontal montiert. Im nächsten Schritt (s. Fig. 3E) wird das zweite Rotorblatt 200 an den Montageadapter 300 montiert, welches an dem ersten Rotorblattanschluss 121 montiert ist. Hierbei kann das zweite Rotorblatt 200 im Wesentlichen horizontal angehoben werden. Das zweite Rotorblatt 200 wird mittels des Montageadapters 300 an dem ersten Rotorblattanschluss 121 montiert. Der Adapterabschnitt, an welchem das Rotorblatt 200 befestigt wird, befindet sich hierbei in einer 9 Uhr-Position. Die Montage des zweiten Rotorblattes 200 kann mittels einer Hebetraverse 500 erfolgen. Im nächsten Schritt (s. Fig. 3F) wird das zweite Rotorblatt 200 um 30° nach unten abgelassen, so dass sich das zweite Rotorblatt 200 in einer 8 Uhr-Position befindet.

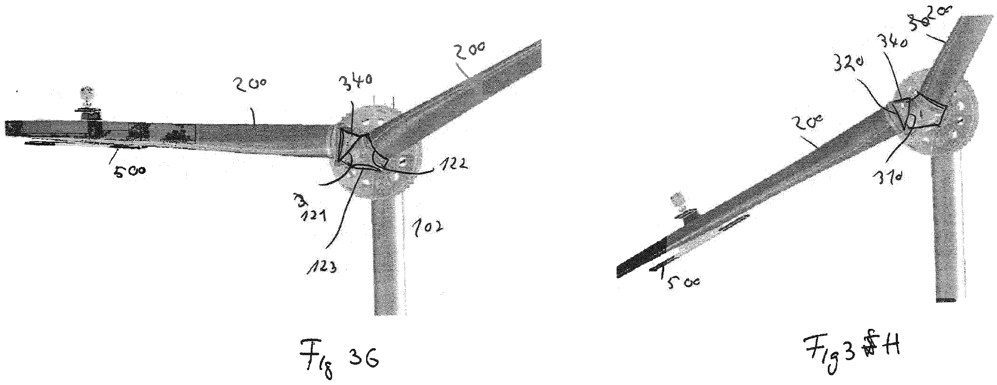

Im nächsten Schritt gemäß Fig. 3G wird das zweite Rotorblatt 200 um 30° hochgezogen und der Winkel zwischen dem ersten und zweiten Adapterabschnitt 310, 320 wird z. B. auf 30° verkleinert. Damit befindet sich das zweite Rotorblatt in der 9 Uhr-Position.

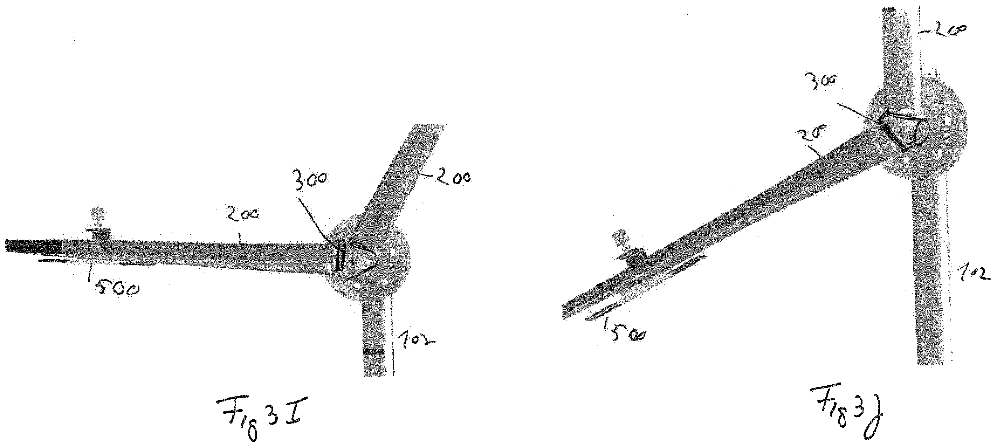

Im nächsten Schritt gemäß Fig. 3H wird das zweite Rotorblatt um 30° abgelassen und im Schritt gemäß Fig. 3I wird das zweite Rotorblatt wieder um 30° hochgezogen und der Winkel zwischen den Adapterabschnitten des Montageadapters 300 wird auf Null reduziert.

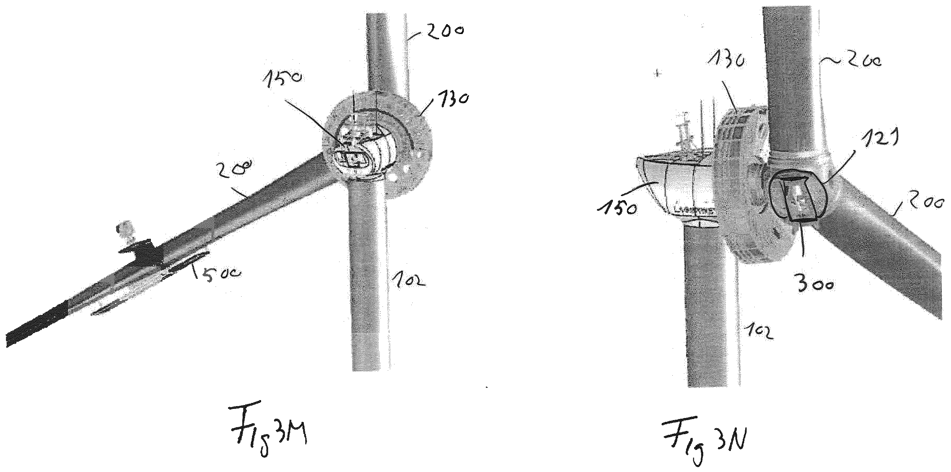

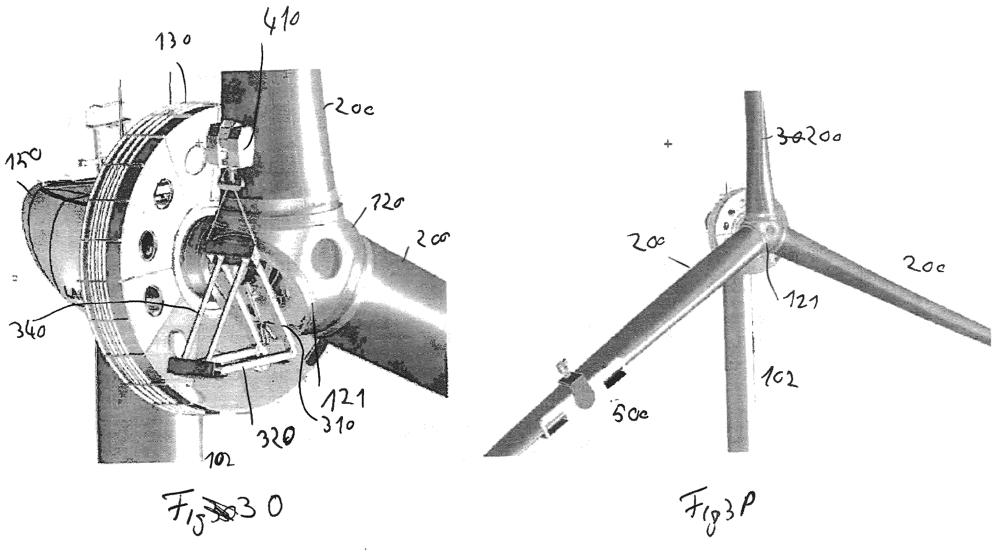

Im nächsten Schritt gemäß Fig. 3J wird das zweite Rotorblatt wieder um 30° abgelassen und im darauffolgenden Schritt gemäß Fig. 3K wird das zweite Rotorblatt 200 vom Montageadapter entfernt. Im nächsten Schritt wird das Maschinenhaus 150 um 180° gedreht, d. h. der Azimutwinkel wird um 180° verstellt. Im nächsten Schritt gemäß Fig. 3M wird das zweite Rotorblatt 200 an dem dritten Rotorblattanschluss 123 montiert. Darauffolgend wird gemäß Fig. 3N das Maschinenhaus 150 um 90° gedreht, d. h. der Azimutwinkel wird um 90° verstellt. Gemäß Fig. 3O wird der Montageadapter dann mittels des Kranhakens 410 demontiert. Der zweite Rotorblattanschluss 122 befindet sich dann in einer 8 Uhr-Position. Anschließend kann das dritte Rotorblatt dann gemäß Fig. 3P an dem zweiten Rotorblattanschluss 122 montiert werden.

Gemäß einem Aspekt der vorliegenden Erfindung erfolgt eine Montage der Rotorblätter 200 einer Windenergieanlage 100 mit Hilfe eines Montageadapters 300, der an einem Rotorblattanschluss 121, 122, 123 montiert wird. Der Montageadapter 300 weist eine erste und zweite Flanschfläche 311, 321 auf, welche in einem Winkel zueinander angeordnet sind. Optional kann der Winkel zwischen der ersten und zweiten Flanschfläche 311, 321 verstellt werden. Dies kann durch eine Verwendung von Rundschlingen 340 mit unterschiedlicher Länge erfolgen. Damit kann z. B. ein Winkel von 90° oder 30° eingestellt werden.

Gemäß einem Aspekt der vorliegenden Erfindung kann der Montageadapter 300 an einem Rotorblattanschluss 121, 122, 123 der Nabe 120 der Windenergieanlage 100 montiert werden, bevor die Nabe 120 montiert wird. Insbesondere kann die Nabe 120 hierbei mittels des Montagearms 330 angehoben und an oder in der Gondel 104 montiert werden.

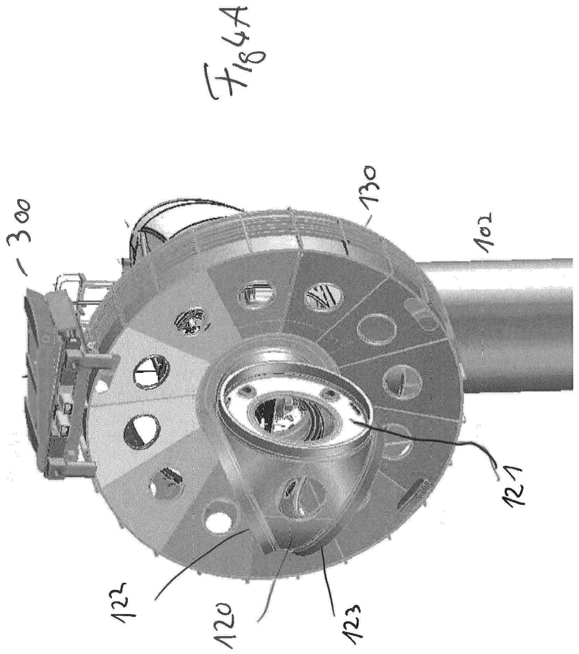

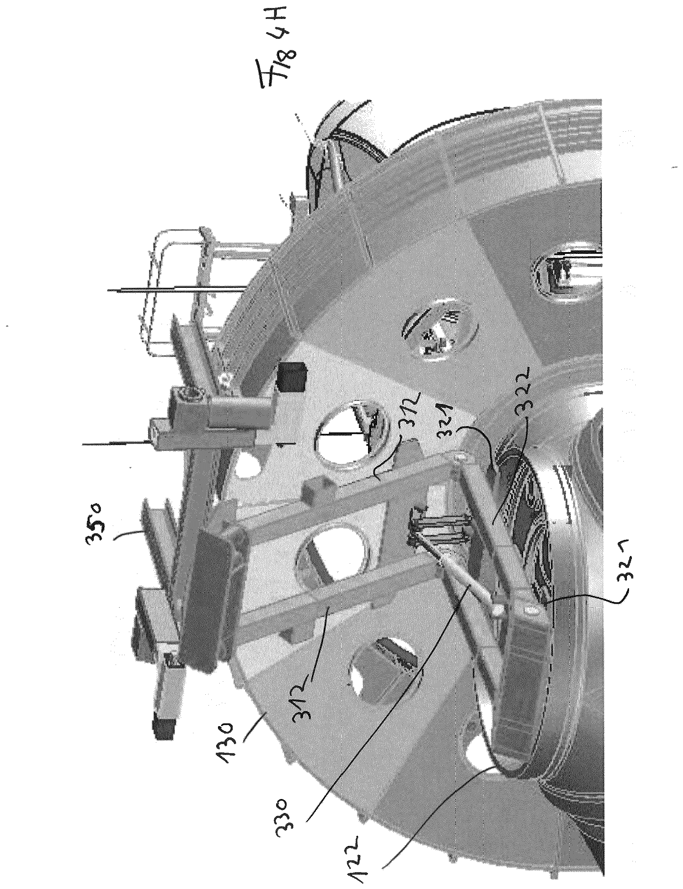

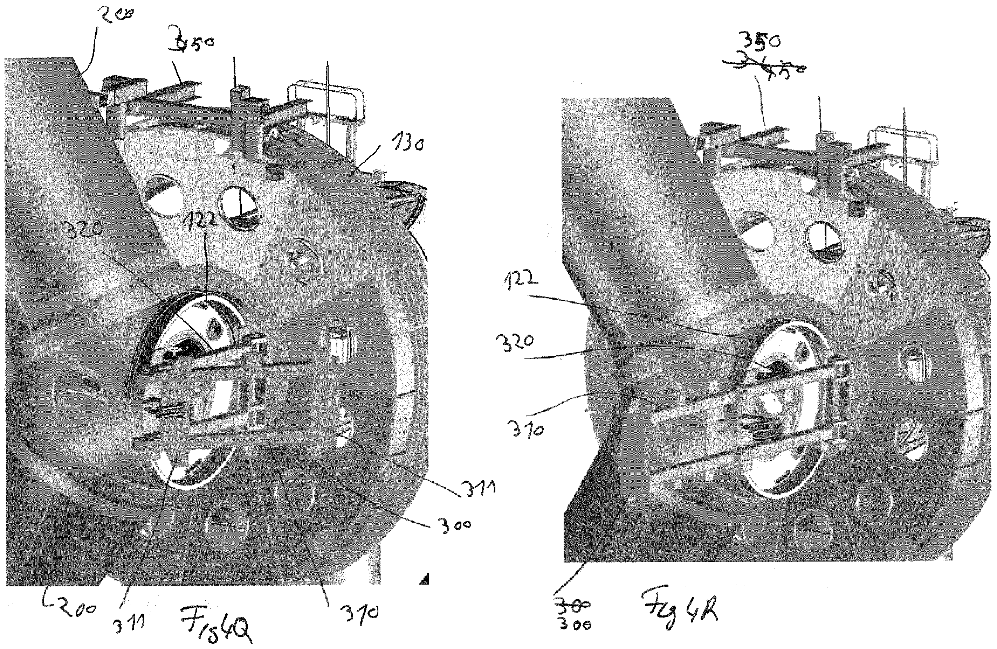

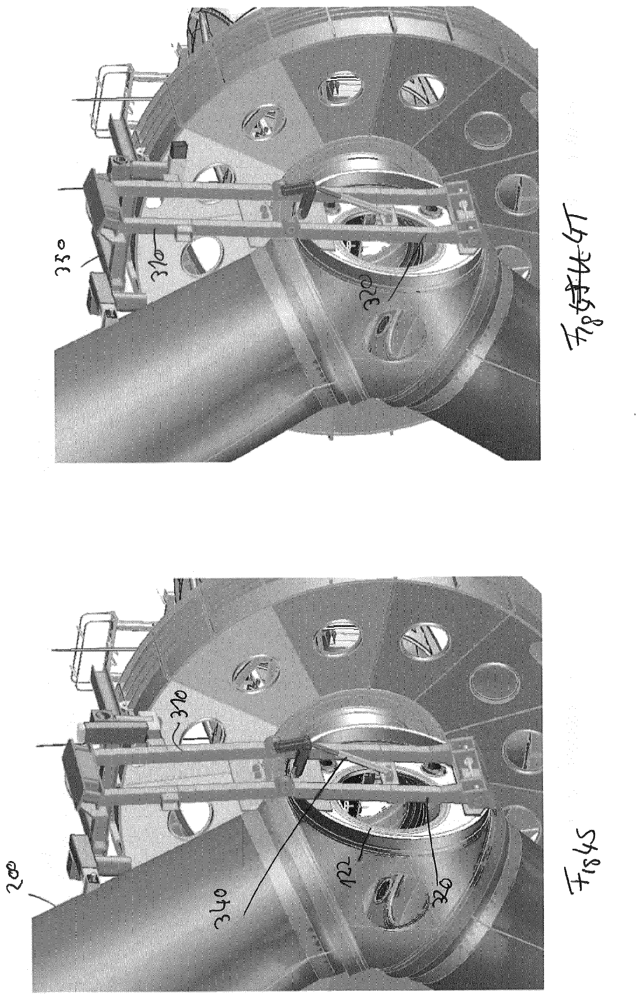

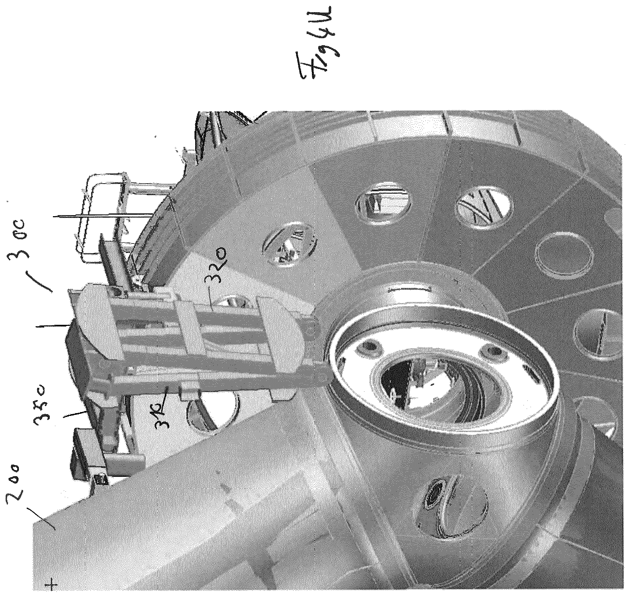

Fig. 4A bis 4X zeigen jeweils eine Ansicht eines Montageadapters gemäß einem dritten Ausführungsbeispiel während der Montage der Rotorblätter 200 einer Windenergieanlage 100. In Fig. 4A ist eine Ausgangsstellung gezeigt. Hierbei ist sowohl der Generator 130 als auch die Rotornabe 120 bereits montiert. Optional kann der Montageadapter 300 zusammen mit dem Generator 130 oder einem Teil des Generators 130 mittels des Krans hochgezogen werden. Alternativ dazu kann der Montageadapter 300 auch nachträglich mittels des Krans auf dem Generator bzw. dem Generatorgehäuse 130 montiert werden.

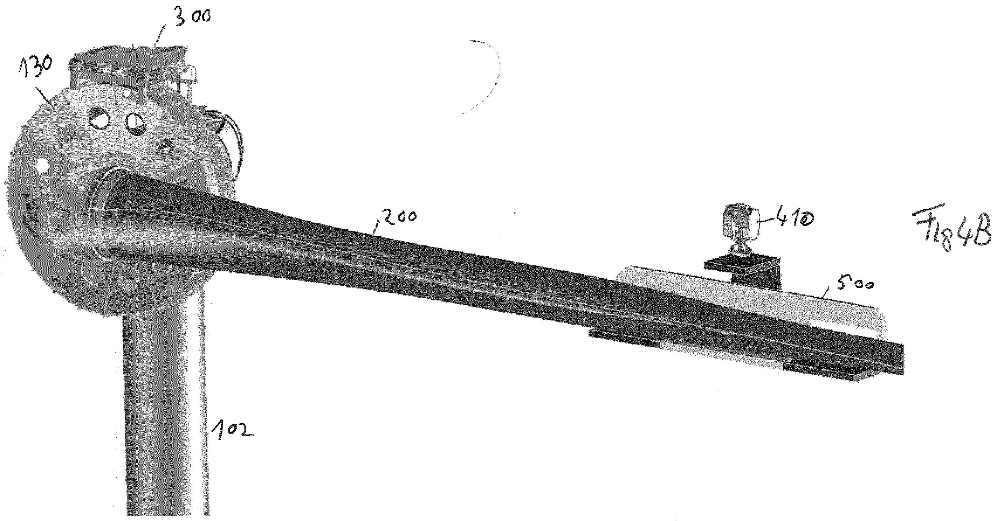

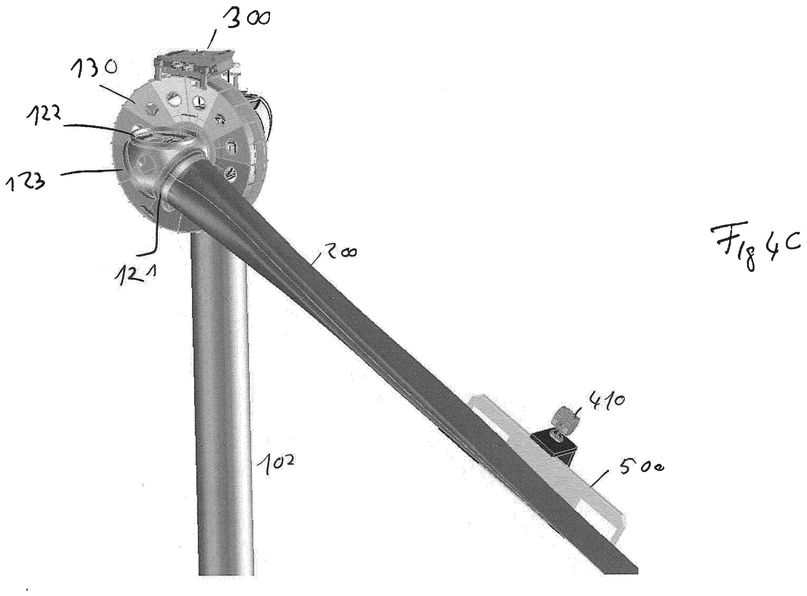

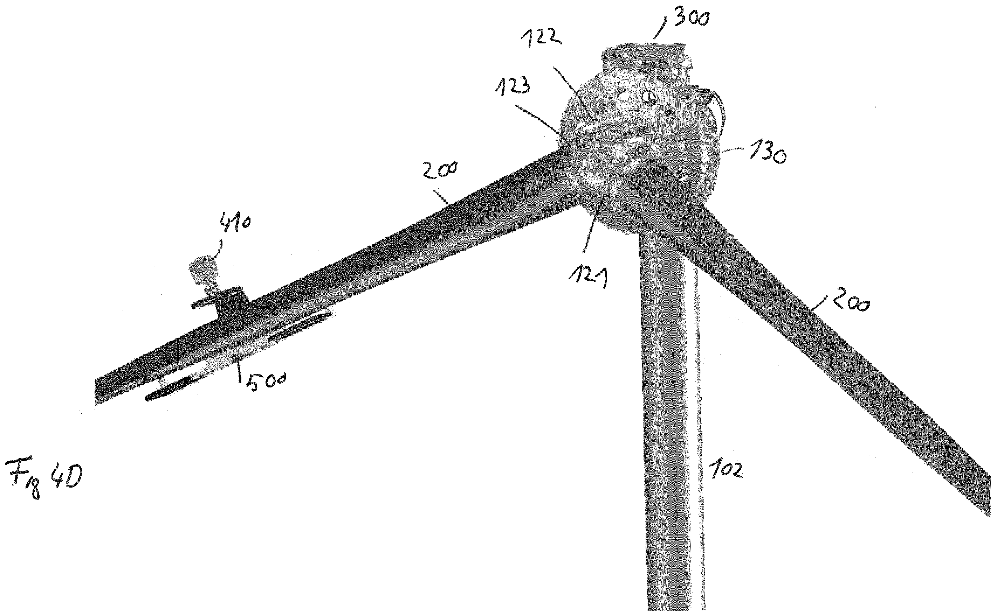

In Fig. 4B wird ein erstes Rotorblatt 200 an einem ersten Rotorblattanschluss 121 montiert. Der erste Rotorblattanschluss 121 bzw. das erste montierte Rotorblatt 200 kann sich hierbei in einer 4 Uhr-Position befinden. In Fig. 4C ist der nächste Schritt des Montageverfahrens dargestellt. Hierbei wird das erste Rotorblatt 200 um 30° beispielsweise mittels einer Blatttraverse 500 abgelassen. Ein zweites Rotorblatt 200 wird beispielsweise mittels der Blatttraverse 500 an einem dritten Rotorblattanschluss 123 montiert (s. Fig. 4D). Der dritte Rotorblattanschluss 123 bzw. das zweite Rotorblatt 200 kann sich dabei in der 8 Uhr-Position befinden.

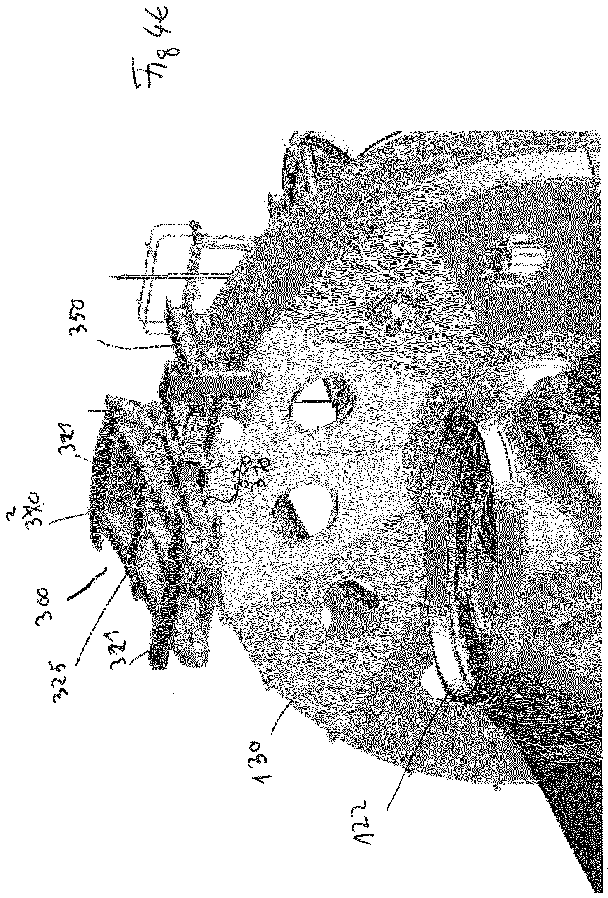

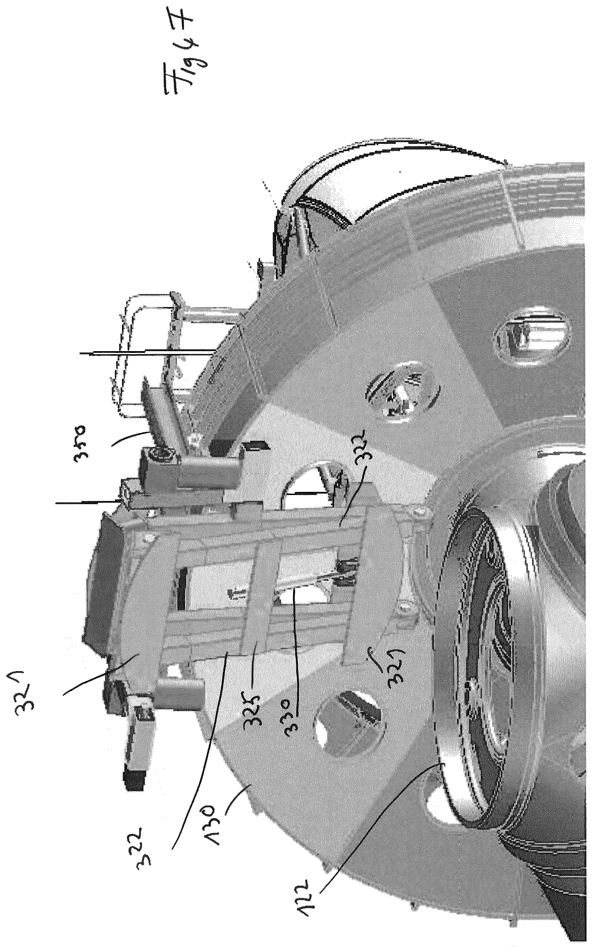

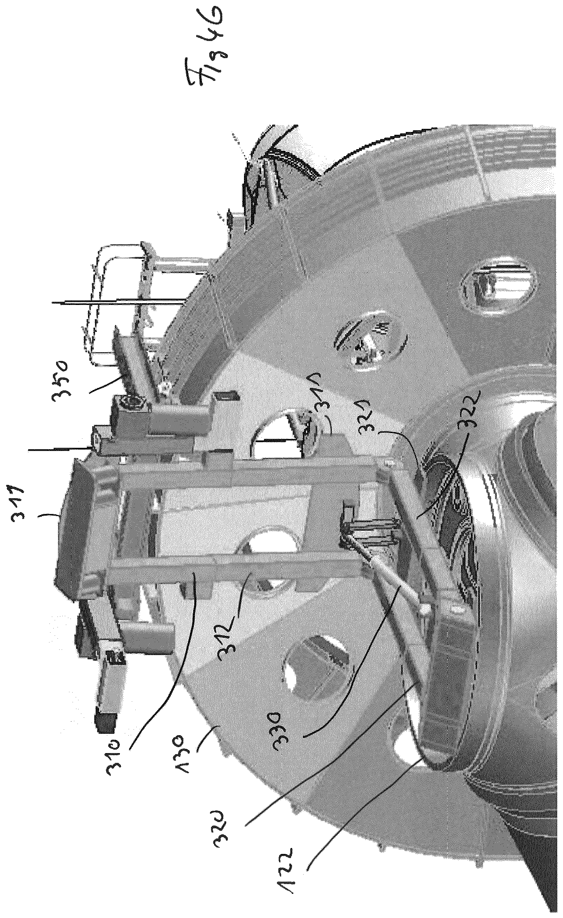

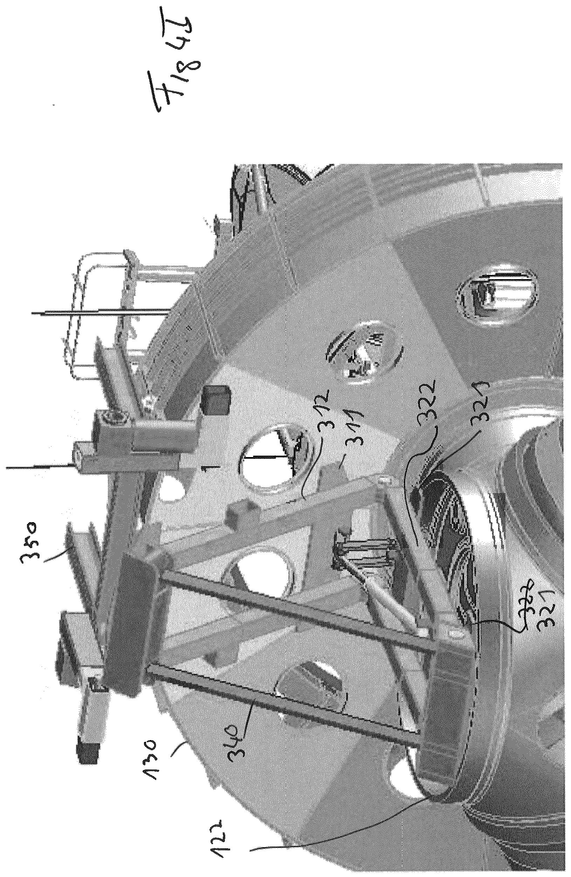

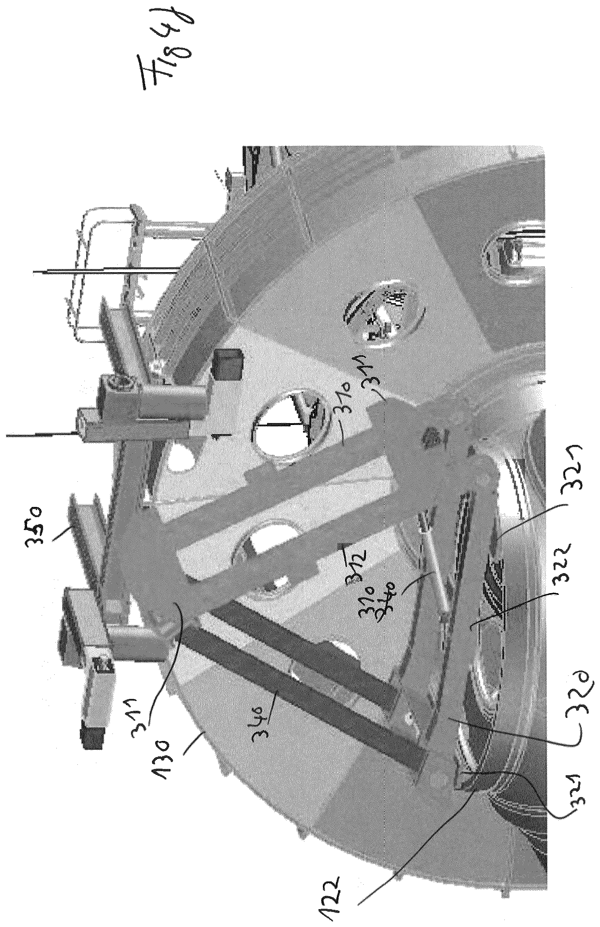

In den Figuren 4E bis 4J wird dargestellt, wie der Montageadapter 300 gemäß dem dritten Ausführungsbeispiel an dem zweiten Rotorblattanschluss 122 montiert wird. Wie in Fig. 4E dargestellt, befindet sich der Montageadapter 300 an dem Generator bzw. einem Generatorgehäuse 130. Der Montageadapter 300 wird gedreht (Fig. 4E) und um 90° in Richtung der Nabe 120 gekippt (Fig. 4F). Ein zweiter Adapterabschnitt 320 wird an den zweiten Rotorblattanschluss 122 montiert (Fig. 4G). Der zweite Adapterabschnitt 320 wird vom Generatorgehäuse 130 gelöst und kann beispielsweise mittels der Hydraulikeinheit 330 in einem gewünschten Winkel zum ersten Adapterabschnitt 310 gehalten werden. Anschließend können - wie in Fig. 4I gezeigt - zwei Rundschlingen 340 an den zweiten Enden des ersten und zweiten Adapterabschnitts 310, 320 befestigt werden. In Fig. 4J ist gezeigt, wie der Montageadapter mittels des zweiten Rotorblattanschlusses 122 um 90° gedreht wird. Damit ist der Montageadapter 300 zur Aufnahme des dritten Rotorblattes geeignet bzw. in die richtige Position gebracht.

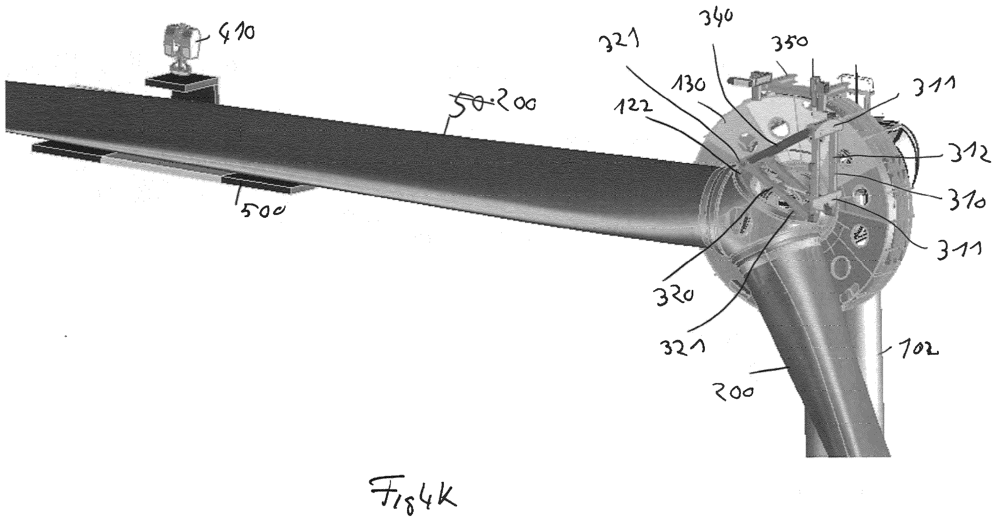

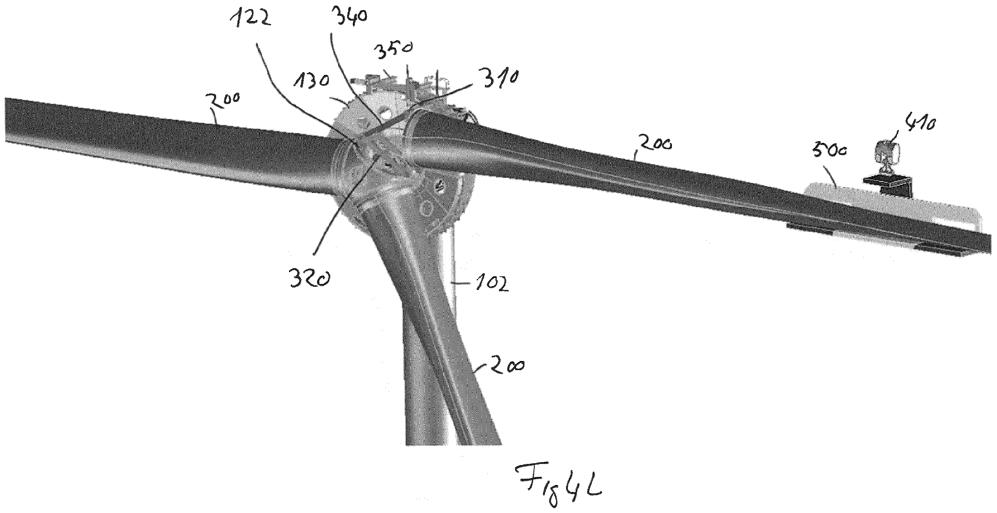

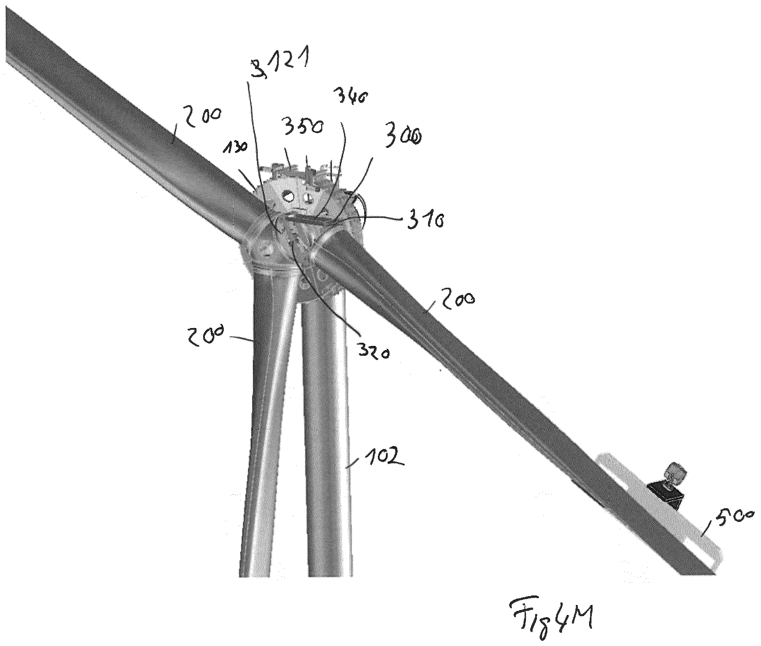

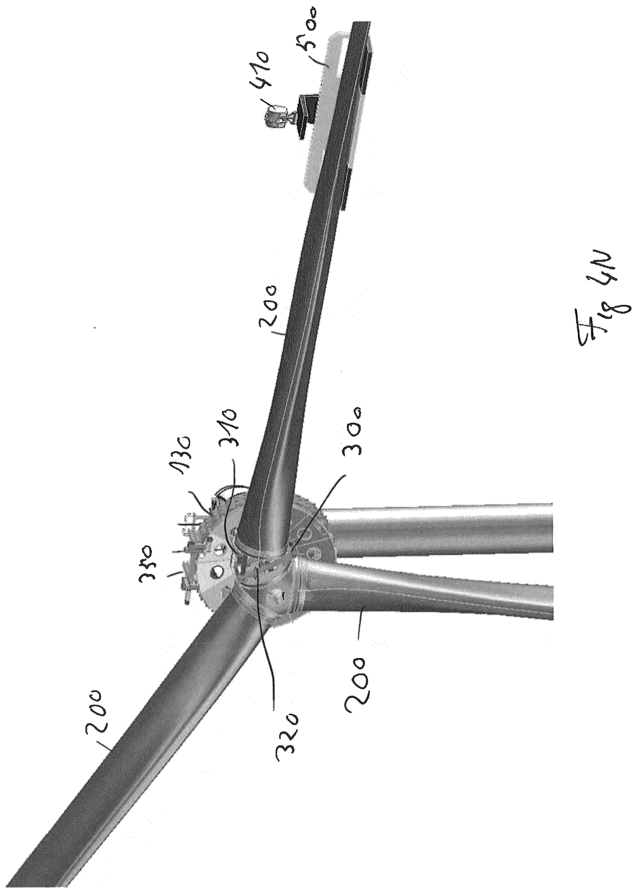

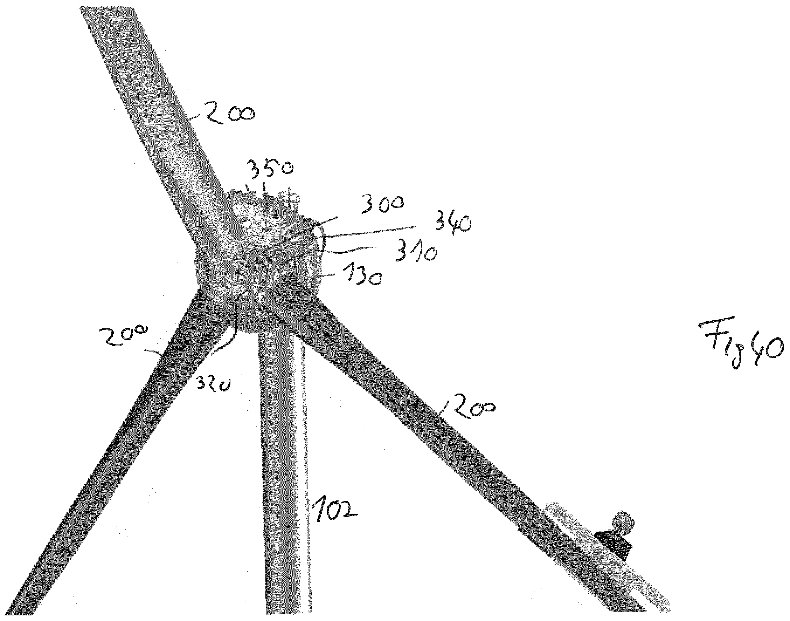

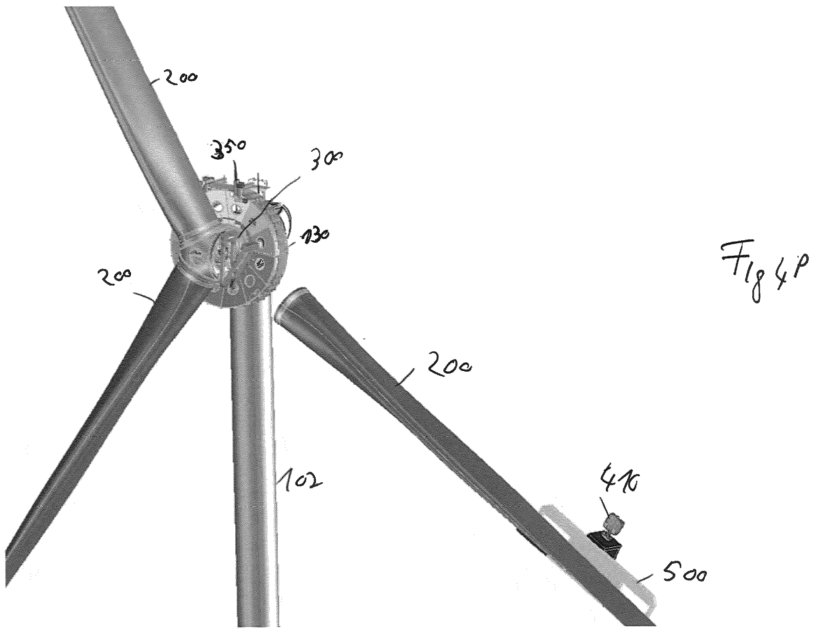

Gemäß Fig. 4K wird die Rotornabe 120 gedreht, beispielsweise um 30°, so dass sich der zweite Adapterabschnitt 320 im Wesentlichen parallel zur Turmlängsdrehachse befindet. Dies kann beispielsweise dadurch erreicht werden, dass das zweite Rotorblatt um 30° nach oben gezogen wird. In Fig. 4L ist dargestellt, wie das dritte Rotorblatt 200 an dem ersten Adapterabschnitt 310 des Montageadapters 300, beispielsweise mittels einer Rotorblatttraverse 500, montiert ist. In Fig. 4M wird das dritte Rotorblatt um 30° abgelassen und in Fig. 4N wird das Rotorblatt wieder um 30° hochgezogen und kürzere Rundschlingengelenke werden an den zweiten Enden des ersten und zweiten Adapterabschnitts 310, 320 befestigt. Damit wurde der Winkel zwischen dem ersten und zweiten Adapterabschnitt 310, 320 reduziert. Anschließend kann gemäß Fig. 4O das dritte Rotorblatt 200 wieder um 30° abgelassen werden. Gemäß Fig. 4P kann das dritte Rotorblatt 200 vom zweiten Adapterabschnitt 320 des Montageadapters demontiert werden.

In den Schritten gemäß Fig. 4Q bis 4U werden die Schritte zur Demontage des Montageadapters 300 vom dritten Rotorblattanschluss 123 dargestellt. Hierbei können die Rundschlingen 340 gelöst werden und der zweite Adapterabschnitt 320 kann mittels der Hydraulikeinheit 330 bis zu einem Winkel von 180° ausgefahren werden. Anschließend wird der zweite Rotorblattanschluss 122 um 90° gedreht und das zweite Ende des zweiten Adapterabschnitts 320 kann an dem Generatorgehäuse 130 befestigt werden. Anschließend kann der erste Adapterabschnitt 310 von dem dritten Rotorblattanschluss 123 gelöst werden und der Winkel zwischen dem ersten und zweiten Adapterabschnitt kann mittels der Hydraulikeinheit 330 auf Null reduziert werden, so dass der erste Adapterabschnitt 310 nach oben geklappt wird.

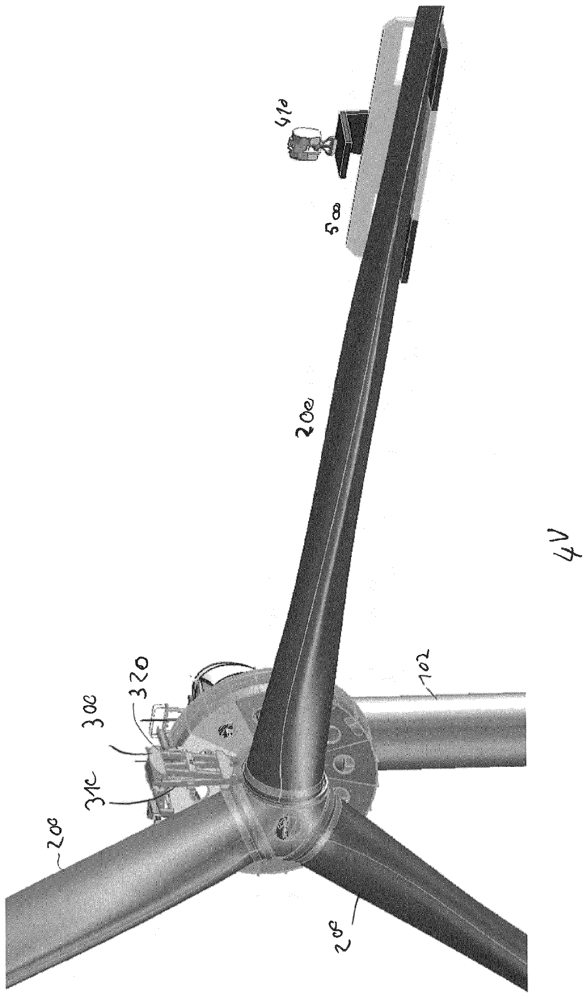

In Fig. 4V kann das Rotorblatt dann unmittelbar an dem dritten Rotorblattanschluss 123 montiert werden.

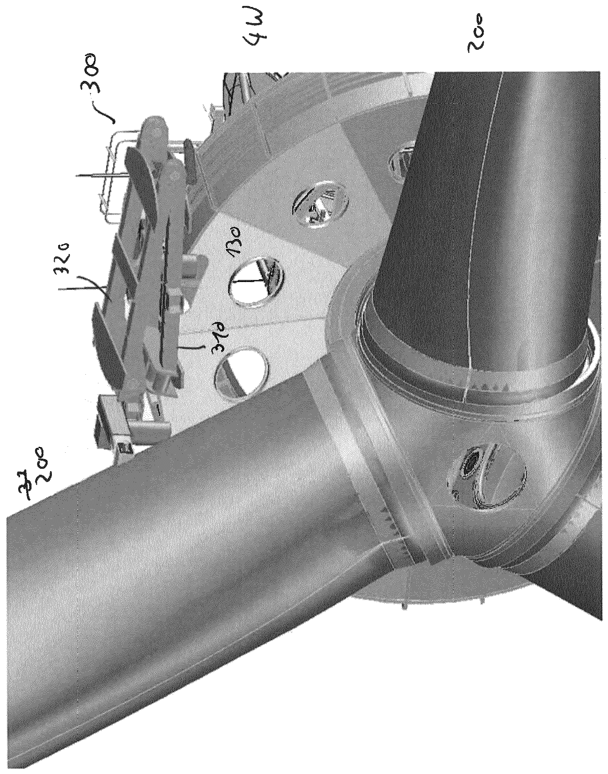

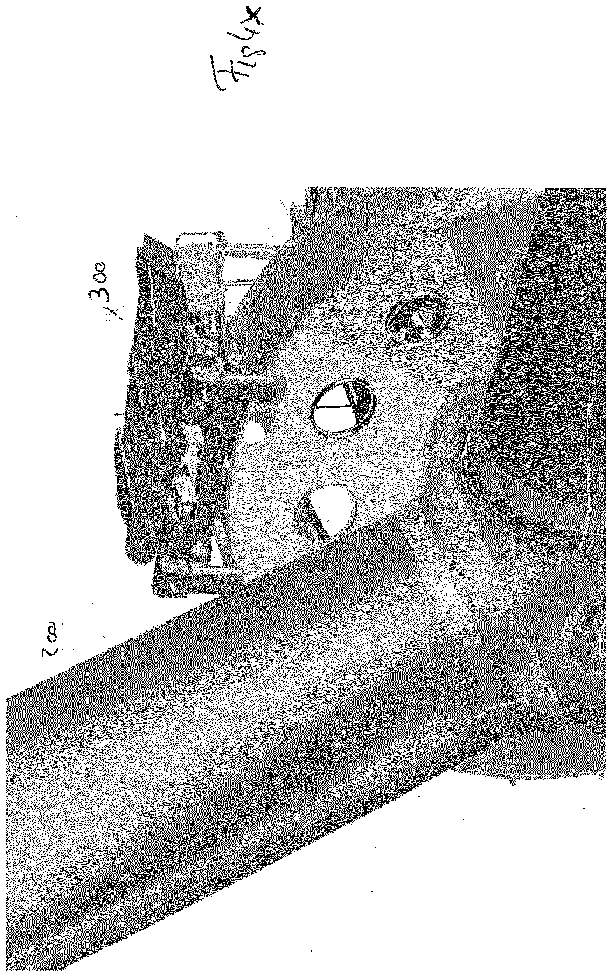

In den Figuren 4W und 4X kann dann der Montageadapter in eine Transportstellung gebracht werden und kann mittels des Krans nach unten abgelassen werden.

Gemäß einem Aspekt der vorliegenden Erfindung kann somit der Kran, welcher zur Montage der Gondel 104 verwendet wird, auch zur Montage der Rotorblätter 200 verwendet werden. Damit reicht es aus, wenn ein Kran auf der Baustelle vorhanden ist.

Gemäß der Erfindung können die Rotorblätter 200 entweder horizontal oder bei 30° montiert werden.

Gemäß einem Aspekt der vorliegenden Anmeldung weist der Montageadapter einen ersten und zweiten Adapterabschnitt auf, welche zueinander verschwenkbar bzw. drehbar ausgestaltet sind. Hierbei kann der Winkel zwischen dem ersten und zweiten Adapterabschnitt beispielsweise 30° oder 60° betragen. Alternativ dazu kann der Montageadapter eine Betriebsposition aufweisen, bei welcher der erste und zweite Adapterabschnitt parallel zueinander ausgestaltet sind.

Gemäß einem Aspekt der vorliegenden Erfindung kann das oben beschriebene Verfahren zur Montage von Rotorblättern 200 einer Windenergieanlage insbesondere bei einer Turmhöhe von > 160 m angewandt werden.

### Bezugszeichenliste

- 100: Windenergieanlage
- 102: Turm
- 102a: Turmlängsachse
- 104: Gondel
- 106: Rotor
- 110: Spinner
- 120: Nabe
- 121: Rotorblattanschluss
- 122: Rotorblattanschluss
- 123: Rotorblattanschluss
- 130: Generatorgehäuse
- 150: Maschinenhaus
- 200: Rotorblätter
- 300: Montageadapter
- 310: erster Adapterabschnitt
- 311: erste Flanschfläche
- 312: erste Streben
- 313: erstes Ende
- 314: zweites Ende
- 320: zweiter Adapterabschnitt
- 321: zweite Flanschfläche
- 322: zweite Streben
- 323: erstes Ende
- 324: zweites Ende
- 325: Querstrebe
- 330: Teleskopeinheit/Hydraulikeinheit
- 331: erstes Ende
- 332: zweites Ende
- 340: Rundschlinge
- 341: erstes Ende
- 342: zweites Ende
- 410: Kranhaken
- 420: Seil
- 500: Blatttraverse
- S: Schwenkachse

## Patentansprüche

1. Verfahren zur Montage von Rotorblättern (200) an einer Windenergieanlage (100), wobei die Windenergieanlage (100) eine Nabe (120) mit drei Rotorblattanschlüssen (121 - 123) zur Aufnahme von Rotorblättern (200) und eine Turmlängsachse (102a) aufweist,
wobei ein Montageadapter (300) zur Montage der Rotorblätter verwendet wird,
wobei der Montageadapter (300) einen ersten Adapterabschnitt (310) mit einer ersten Flanschfläche (311), welche dazu geeignet ist, ein Rotorblatt (200) der Windenergieanlage (100) daran zu befestigen, und einen zweiten Adapterabschnitt (320) mit einer zweiten Flanschfläche (321), welche dazu geeignet ist, an einem Rotorblattanschluss (121, 122, 123) einer Windenergieanlage (100) befestigt zu werden, aufweist,
**dadurch gekennzeichnet, dass** der erste und zweite Adapterabschnitt (310, 320) um eine Schwenkachse (S) zueinander verschwenkbar sind,
wobei ein Winkel (α), welcher durch die erste und zweite Flanschfläche (311, 321) aufgespannt wird, veränderbar ist, um mindestens eine erste und zweite Betriebsposition des Montageadapters (300) mit unterschiedlichen Winkeln (α) zu gewährleisten,
wobei das Verfahren folgende Schritte aufweist:
Montieren des Montageadapters (300) an einem der drei Rotorblattanschlüsse (121 - 123),
Drehen der Nabe (120), so dass einer der drei Rotorblattanschlüsse (121 - 123) sich in einer 3-Uhr-Position oder in einem Winkel von 90° bezogen auf die Turmlängsachse (102a) befindet,
Anheben und Montieren eines ersten Rotorblattes (200) an diesem Rotorblattanschluss (121, 122, 123),
wobei sich der Montageadapter (300) in einer ersten Betriebsposition mit einem ersten Winkel (α) zwischen der ersten und zweiten Flanschfläche (311, 321) befindet,
Montieren eines zweiten Rotorblattes (200) an einem weiteren der drei Rotorblattanschlüsse (121 - 123),
Montieren eines dritten Rotorblattes an der zweiten Flanschfläche (322) des Montageadapters (300),
Ändern des Winkels (α) zwischen der ersten und zweiten Flanschfläche (311, 321), so dass sich der Montageadapter (300) in einer zweiten Betriebsposition befindet,
Demontieren des dritten Rotorblattes (200),
Demontieren des Montageadapters (300), und
Montieren des dritten Rotorblattes (200).

2. Verfahren nach Anspruch 1, ferner mit den Schritten:
Drehen der Nabe (120), so dass sich die zweite Flanschfläche (322) parallel zur Turmlängsachse (102a) befindet, bevor das dritte Rotorblatt (200) montiert wird,
Montieren des dritten Rotorblattes (200) an der zweiten Flanschfläche (322),
Drehen der Nabe (120) im Uhrzeigersinn,
Ändern der Betriebsposition des Montageadapters (300),
Drehen der Nabe (120) im Uhrzeigersinn um 30°,
Demontage des dritten Rotorblattes (200),
Demontage des Montageadapters (300), und
Montage des dritten Rotorblattes (200).

3. Verfahren nach Anspruch 1, ferner mit den Schritten:
Montieren des zweiten Rotorblattes (200) an einer zweiten Flanschfläche (321) des Montageadapters (300), welche parallel zur Turmlängsachse (102a) vorgesehen ist,
Ändern der Betriebsposition des Montageadapters (300),
Drehen der Nabe (120) im Uhrzeigersinn,
Ändern der Betriebsposition des Montageadapters (300), so dass die erste und zweite Flanschfläche (311, 321) im Wesentlichen parallel angeordnet sind und das dritte Rotorblatt (200) an der zweiten Flanschfläche (321) befestigt ist und im Wesentlichen horizontal angeordnet ist,
Demontage des dritten Rotorblattes (200),
Demontage des Montageadapters (300), und
Montage des dritten Rotorblattes (200).

4. Verfahren nach Anspruch 1, wobei
der erste Adapterabschnitt (310) zwei erste Streben (312) aufweist, welche jeweils mit der ersten Flanschfläche (311) verbunden sind,
der zweite Adapterabschnitt (320) zwei zweite Streben (322, 323) aufweist, welche jeweils mit der zweiten Flanschfläche (321) verbunden sind.

5. Verfahren nach Anspruch 1 oder 2, ferner mit
einer Teleskopeinheit (330) mit veränderbarer Länge, die sowohl mit dem ersten als auch mit dem zweiten Adapterabschnitt (310, 320) verbunden ist und durch Verändern ihrer Länge den Winkel zwischen dem ersten und zweiten Adapterabschnitt einstellen kann.

6. Verfahren nach einem der Ansprüche 1 bis 3, wobei
die erste und zweite Flanschfläche (311, 321) jeweils zwei Blechabschnitte aufweist, welche jeweils im Bereich der ersten und zweiten Enden der Adapterabschnitte (310, 320) vorgesehen sind.

7. Verwendung eines Montageadapters zur Montage von Rotorblättern (200) an einer Windenergieanlage (100), wobei die Windenergieanlage (100) eine Nabe (120) mit drei Rotorblattanschlüssen (121 - 123) zur Aufnahme von Rotorblättern (200) und eine Turmlängsachse (102a) aufweist,
wobei ein erstes Rotorblatt (200) an einem ersten Rotorblattanschluss (121) montiert wird, welcher sich insbesondere an einer 3 Uhr-Position befindet,
wobei die Nabe (120) um 30° gedreht wird,
wobei das zweite Rotorblatt (200) an dem dritten Rotorblattanschluss (123) montiert wird, welcher sich insbesondere an der 8 Uhr-Position befindet,
wobei ein Montageadapter (300) an einem dritten Rotorblattanschluss (123) befestigt wird,
wobei der Montageadapter (300) einen ersten Adapterabschnitt (310) mit einer ersten Flanschfläche (311), welche dazu geeignet ist, ein Rotorblatt (200) der Windenergieanlage (100) daran zu befestigen, und einen zweiten Adapterabschnitt (320) mit einer zweiten Flanschfläche (321), welche dazu geeignet ist, an einem Rotorblattanschluss (121, 122, 123) einer Windenergieanlage (100) befestigt zu werden, aufweist,
wobei der erste und zweite Adapterabschnitt (310, 320) um eine Schwenkachse (S) zueinander verschwenkbar sind,
wobei ein Winkel (α), welcher durch die erste und zweite Flanschfläche (311, 321) aufgespannt wird, veränderbar ist, um mindestens eine erste und zweite Betriebsposition des Montageadapters (300) mit unterschiedlichen Winkeln (α) zu gewährleisten,
wobei ein Adapterabschnitt um einen gewünschten Winkel aufgeklappt wird, wobei das dritte Rotorblatt (200) montiert wird, wobei sich der aufgeklappte Adapterabschnitt in einer 3 Uhr-Position befindet,
wobei der Rotor (106) um 30° gedreht wird,
wobei das dritte Rotorblatt (200) hochgezogen wird und wobei der Abstandswinkel zwischen dem ersten und zweiten Adapterabschnitt verkürzt wird,
wobei der Rotor (106) um 30° gedreht wird,
wobei das dritte Rotorblatt (200) demontiert wird,
wobei der Montageadapter (300) entfernt wird und
wobei das dritte Rotorblatt (200) montiert wird.

## Claims

1. Method for mounting rotor blades (200) on a wind turbine (100), wherein the wind turbine (100) has a hub (120) with three rotor blade connections (121 - 123) for receiving rotor blades (200) and a longitudinal tower axis (102a),
wherein a mounting adapter (300) is used for mounting the rotor blades, wherein the mounting adapter (300) comprises a first adapter portion (310) having a first flange surface (311) suitable for being attached to a rotor blade (200) of the wind turbine (100) , and a second adapter portion (320) having a second flange surface (321) suitable for being attached to a rotor blade connection (121, 122, 123) of a wind turbine (100),
**characterised in that** the first and second adapter portions (310, 320) are pivotable relative to one another about a pivot axis (S),
wherein an angle (α), which is spanned by the first and second flange surfaces (311, 321), is variable in order to ensure at least a first and second operating position of the mounting adapter (300) with different angles (α),
wherein the method comprises the following steps:
Mounting the mounting adapter (300) to one of the three rotor blade connections (121 - 123),
Rotating the hub (120) so that one of the three rotor blade connections (121 - 123) is in a 3 o'clock position or at an angle of 90° relative to the longitudinal axis (102a) of the tower,
Lifting and mounting a first rotor blade (200) on this rotor blade connection (121, 122, 123),
wherein the mounting adapter (300) is located in a first operating position with a first angle (α) between the first and second flange surfaces (311, 321),
Mounting a second rotor blade (200) to a further one of the three rotor blade connections (121 - 123),
Mounting a third rotor blade on the second flange surface (322) of the mounting adapter (300),
Changing the angle (α) between the first and second flange surfaces (311, 321) so that the mounting adapter (300) is in a second operating position, Dismantling the third rotor blade (200),
Dismantling the mounting adapter (300), and
Mounting the third rotor blade (200).

2. The method according to claim 1, further comprising the steps of:
Rotating the hub (120) so that the second flange surface (322) is parallel to the longitudinal tower axis (102a), before mounting the third rotor blade (200),
Mounting the third rotor blade (200) on the second flange surface (322),
Turning the hub (120) clockwise,
Changing the operating position of the mounting adapter (300),
Turning the hub (120) clockwise by 30°,
Dismantling the third rotor blade (200),
Dismantling the mounting adapter (300), and
Mounting the third rotor blade (200).

3. Method according to claim 1, further comprising the steps of:
Mounting the second rotor blade (200) on a second flange surface (321) of the mounting adapter (300), which is provided parallel to the longitudinal tower axis (102a),
Changing the operating position of the mounting adapter (300),
Turning the hub (120) clockwise,
Changing the operating position of the mounting adapter (300) so that the first and second flange surfaces (311, 321) are arranged substantially parallel and the third rotor blade (200) is attached to the second flange surface (321) and is arranged substantially horizontally,
Dismantling the third rotor blade (200),
Dismantling the mounting adapter (300), and
Mounting the third rotor blade (200).

4. The method according to claim 1, wherein
the first adapter portion (310) has two first struts (312), which are each connected to the first flange surface (311),
the second adapter portion (320) comprises two second struts (322, 323), which are each connected to the second flange surface (321).

5. The method according to claim 1 or 2, further comprising
a telescopic unit (330) with variable length, which is connected to both the first and second adapter portions (310, 320) and can adjust the angle between the first and second adapter portions by changing its length.

6. The method according to any one of claims 1 to 3, wherein
the first and second flange surfaces (311, 321) each comprise two sheet metal portions which are provided in the region of the first and second ends of the adapter portions (310, 320), respectively.

7. Use of a mounting adapter for mounting rotor blades (200) on a wind turbine (100), wherein the wind turbine (100) has a hub (120) with three rotor blade connections (121 - 123) for receiving rotor blades (200) and a longitudinal tower axis (102a),
wherein a first rotor blade (200) is mounted on a first rotor blade connection (121), which is located in particular at a 3 o'clock position,
wherein the hub (120) is rotated by 30°,
wherein the second rotor blade (200) is mounted on the third rotor blade connection (123), which is located in particular at the 8 o'clock position,
wherein a mounting adapter (300) is attached to a third rotor blade connection (123),
wherein the mounting adapter (300) comprises a first adapter portion (310) having a first flange surface (311) adapted to attach a rotor blade (200) of the wind turbine (100) thereto, and a second adapter portion (320) having a second flange surface (321) adapted to be attached to a rotor blade connection (121, 122, 123) of a wind turbine (100),
wherein the first and second adapter portions (310, 320) are pivotable relative to each other about a pivot axis (S),
wherein an angle (α), which is spanned by the first and second flange surfaces (311, 321), is variable in order to ensure at least a first and second operating position of the mounting adapter (300) with different angles (α),
wherein an adapter portion is unfolded by a desired angle,
wherein the third rotor blade (200) is mounted with the unfolded adapter portion in a 3 o'clock position,
wherein the rotor (106) is rotated by 30°,
wherein the third rotor blade (200) is pulled up and wherein the distance angle between the first and second adapter portions is shortened,
wherein the rotor (106) is rotated by 30°,
wherein the third rotor blade (200) is dismantled,
wherein the mounting adapter (300) is dismantled and
wherein the third rotor blade (200) is mounted.

## Revendications

1. Procédé de montage de pales de rotor (200) sur une éolienne (100), dans lequel l'éolienne (100) présente un moyeu (120) avec trois raccords de pales de rotor (121 - 123) destinés à recevoir des pales de rotor (200) et un axe longitudinal de mât (102a),
dans lequel un adaptateur de montage (300) est utilisé pour monter les pales de rotor,
dans lequel l'adaptateur de montage (300) présente une première section d'adaptateur (310) avec une première surface de bride (311) qui est adaptée pour y fixer une pale de rotor (200) de l'éolienne (100), et une deuxième section d'adaptateur (320) avec une deuxième surface de bride (321), qui est adaptée pour être fixée sur un raccord de pale de rotor (121, 122, 123) d'une éolienne (100),
**caractérisé en ce que** les première et deuxième sections d'adaptateur (310, 320) peuvent pivoter l'une par rapport à l'autre autour d'un axe de pivotement (S),
dans lequel un angle (α), qui est formé par la première et la deuxième surface de bride (311, 321), est modifiable pour assurer au moins une première et une deuxième position de fonctionnement de l'adaptateur de montage (300) avec des angles (α) différents,
dans lequel le procédé présente des étapes suivantes :
de montage de l'adaptateur de montage (300) sur l'un des trois raccords de pale (121 - 123),
de rotation du moyeu (120) de telle sorte que l'un des trois raccords de pales de rotor (121 - 123) se trouve dans une position à 3 heures ou à un angle de 90° par rapport à l'axe longitudinal de mât (102a),
de levage et de montage d'une première pale de rotor (200) sur ce raccord de pale de rotor (121, 122, 123),
dans lequel l'adaptateur de montage (300) se trouve dans une première position de fonctionnement avec un premier angle (α) entre les première et deuxième surfaces de bride (311, 321),
de montage d'une deuxième pale de rotor (200) sur un autre des trois raccords de pale de rotor (121 - 123),
de montage d'une troisième pale de rotor sur la deuxième surface de bride (322) de l'adaptateur de montage (300),
de modification de l'angle (α) entre les première et deuxième surfaces de bride (311, 321) de telle sorte que l'adaptateur de montage (300) se trouve dans une deuxième position de fonctionnement,
de démontage de la troisième pale de rotor (200),
de démontage de l'adaptateur de montage (300), et
de montage de la troisième pale de rotor (200).

2. Procédé selon la revendication 1, avec en outre les étapes :
de rotation du moyeu (120) de telle sorte que la deuxième surface de bride (322) soit parallèle à l'axe longitudinal de mât (102a) avant le montage de la troisième pale de rotor (200),
de montage de la troisième pale de rotor (200) sur la deuxième surface de bride (322),
de rotation du moyeu (120) dans le sens des aiguilles d'une montre,
de modification de la position de fonctionnement de l'adaptateur de montage (300),
de rotation du moyeu (120) de 30° dans le sens des aiguilles d'une montre,
de démontage de la troisième pale de rotor (200),
de démontage de l'adaptateur de montage (300), et
de montage de la troisième pale de rotor (200).

3. Procédé selon la revendication 1, avec en outre les étapes :
de montage de la deuxième pale de rotor (200) sur une deuxième surface de bride (321) de l'adaptateur de montage (300) qui est prévue parallèlement à l'axe longitudinal de mât (102a),
de modification de la position de fonctionnement de l'adaptateur de montage (300),
de rotation du moyeu (120) dans le sens des aiguilles d'une montre,
de modification de la position de fonctionnement de l'adaptateur de montage (300) de telle sorte que les première et deuxième surfaces de bride (311, 321) soient sensiblement parallèles et que la troisième pale de rotor (200) soit fixée sur la deuxième surface de bride (321) et soit sensiblement horizontale,
de démontage de la troisième pale de rotor (200),
de démontage de l'adaptateur de montage (300), et
de montage de la troisième pale de rotor (200).

4. Procédé selon la revendication 1, dans lequel
la première section d'adaptateur (310) présente deux premières entretoises (312) qui sont respectivement reliées à la première surface de bride (311),
la deuxième section d'adaptateur (320) présente deux deuxièmes entretoises (322, 323) qui sont respectivement reliées à la deuxième surface de bride (321).

5. Procédé selon la revendication 1 ou 2, avec en outre
une unité télescopique (330) de longueur variable qui est reliée à la fois à la première et à la deuxième section d'adaptateur (310, 320) et qui peut régler l'angle entre la première et la deuxième section d'adaptateur en modifiant sa longueur.

6. Procédé selon l'une quelconque des revendications 1 à 3, dans lequel
la première et la deuxième surface de bride (311, 321) présentent respectivement deux sections de tôle, qui sont respectivement prévues dans la zone des première et deuxième extrémités des sections d'adaptateur (310, 320).

7. Utilisation d'un adaptateur de montage pour monter des pales de rotor (200) sur une éolienne (100), dans laquelle l'éolienne (100) présente un moyeu (120) avec trois raccords de pale de rotor (121 - 123) destinés à recevoir des pales de rotor (200) et un axe longitudinal de mât (102a),
dans laquelle une première pale de rotor (200) est montée sur un premier raccord de pale de rotor (121) qui se trouve en particulier sur une position à 3 heures,
dans laquelle le moyeu (120) est tourné de 30°,
dans laquelle la deuxième pale de rotor (200) est montée sur le troisième raccord de pale de rotor (123) qui se trouve en particulier sur une position à 8 heures,
dans laquelle un adaptateur de montage (300) est fixé sur un troisième raccord de pale de rotor (123),
dans laquelle l'adaptateur de montage (300) présente une première section d'adaptateur (310) avec une première surface de bride (311) qui est adaptée pour y fixer une pale de rotor (200) de l'éolienne (100), et une deuxième section d'adaptateur (320) avec une deuxième surface de bride (321), qui est adaptée pour être fixée à un raccord de pale de rotor (121, 122, 123) d'une éolienne (100),
dans laquelle les première et deuxième sections d'adaptateur (310, 320) peuvent pivoter l'une par rapport à l'autre autour d'un axe de pivotement (S),
dans laquelle un angle (α), qui est formé par la première et la deuxième surface de bride (311, 321), est modifiable pour assurer au moins une première et une deuxième position de fonctionnement de l'adaptateur de montage (300) avec des angles (α) différents,
dans laquelle une section d'adaptateur est dépliée selon un angle souhaité, dans laquelle la troisième pale de rotor (200) est montée, dans laquelle la section d'adaptateur dépliée se trouve dans une position à 3 heures,
dans laquelle le rotor (106) est tourné de 30°,
dans laquelle la troisième pale de rotor (200) est soulevée et dans laquelle l'angle de distance entre la première et la deuxième section d'adaptateur est raccourci,
dans laquelle le rotor (106) est tourné de 30°,
dans laquelle la troisième pale de rotor (200) est démontée,
dans laquelle l'adaptateur de montage (300) est retiré et
dans laquelle la troisième pale de rotor (200) est montée.
